# EUROPÄISCHE PATENTSCHRIFT

(11) **EP 1 610 048 B1**
(45) Veröffentlichungstag und Bekanntmachung des Hinweises auf die Patenterteilung: **18.10.2006**
(21) Anmeldenummer: 04014919.7
(22) Anmeldetag: 25.06.2004
(51) Int. Cl.: F16L 53/00, F01M 13/00, E03B 7/12

(54) **Heizelemente für Fluide**
Heating element for fluids
Elément de chauffage pour liquides

(43) Veröffentlichungstag der Anmeldung: 28.12.2005
(73) Patentinhaber: DBK David + Baader GmbH, 76870 Kandel (DE)
(72) Erfinder: Mathias Proner, 76139 Karlsruhe (DE); Hans-Peter Bauer, 76889 Klingenmünster (DE)
(74) Vertreter: Grünecker, Kinkeldey, Stockmair & Schwanhäusser Anwaltssozietät

(56) Entgegenhaltungen:
- US-A- 4 721 848
- US-A- 5 770 836
- US-A- 5 970 962
- PATENT ABSTRACTS OF JAPAN Bd. 2000, Nr. 12, 3. Januar 2001 (2001-01-03) & JP 2000 260553 A (CANON INC), 22. September 2000 (2000-09-22)

## Beschreibung

Die Erfindung betrifft ein Heizelement für Fluide, insbesondere für Blow-by-Gase, mit wenigstens einem als PTC-Element ausgestalteten elektrischen Heizkörper, der über von außerhalb des Heizelements zugänglich angeordnete Energieversorgungskontakte mit elektrischer Energie versorgbar ist.

Derartige Heizelemente sind bekannt, beispielsweise aus dem nächstliegenden Stand der Technik, der EP-A-1 314 862. In dieser Druckschrift ist eine Heizeinrichtung für ein Druckregelventil, insbesondere für Blow-by-Gase, beschrieben. Die Heizeinrichtung ist als ein einstückig handhabbares und vormontiertes Heizelement aufgebaut; über als Kontaktstifte ausgestaltete Energieversorgungskontakte werden in dem Heizelement gehaltene Heizkörper mit elektrischer Energie versorgt. Weitere Heizelemente für Dieselkraftstoff sind aus der US-A-4 406 785, der US-A-6 109 247 und der US-A-4 818 842 bekannt.

Um eine Fehlfunktion, z. B. einen Ausfall der Beheizung, zu erkennen, ist es notwendig, die Funktion des Heizkörpers zu überwachen. Insbesondere der Ausfall des Heizsystems kann zu schwerwiegenden Problemen führen. So kann z. B. eine ausfallende Heizung im Druckregelventil des Blow-by-Kreislaufes zu einer Vereisung führen, die zu einem Überdruck im Kurbelgehäuse eines Kraftfahrzeuges und somit zu einem kapitalen Motorschaden führt. Ebenso kann ein Ausfall eines Heizsystems, welches zur Verhinderung der Anparaffinierung von Dieselkraftstoff im Filter eingesetzt wird, zum Liegenbleiben eines Fahrzeugs führen. Auch eine erhöhte Wärmeabgabe, wie sie z. B. durch einen Kurzschluss lokal möglich ist, kann zu schwerwiegenden Problemen führen. Um dies zu vermeiden, sind im Stand der Technik verschiedene Lösungswege beschritten worden, die im Folgenden kurz beschrieben sind.

In der US-A-6 080 973 ist ein Durchlauferhitzer gezeigt, bei dem ein Heizkörper mit einem Stromsensor verbunden ist, der den Strom durch den Heizkörper misst. Der Stromsensor ist Teil einer Steuereinheit, die aus dem gemessenen Strom den Widerstand des Heizkörpers berechnet. Über entweder den Widerstand oder den gemessenen Strom können Betriebsstörungen des Durchlauferhitzers entdeckt werden.

Die US-A-5 770 836 offenbart eine Sicherheitsüberwachung für eine Heizdecke, bei der der Strom durch die Heizkörper an einem Anschluss abgegriffen und einem Spannungsteiler zugeführt wird. Wenn der elektrische Kontakt zwischen den Energieversorgungsleitungen für den Heizkörper beispielsweise aufgrund von Kontaktierungsproblemen unterbrochen ist, wird ein Widerstand des Spannungsteilers mit Rückkopplungsleitungen verbunden, so dass ein entsprechendes Störungssignal an einem Anschluss abgegriffen werden kann.

In der US-A-4 736 091 ist eine Steuereinrichtung für einen Heizkörper beschrieben, bei der der Heizkörper gleichzeitig als Temperatursensor eingesetzt wird. Zusätzlich zum Heizstrom wird ein niedriger Sensorstrom durch den Heizkörper geleitet. Über den Spannungsabfall im Sensorstrom kann die entsprechende Heizleistung eingestellt werden. Der Sensorstrom trägt dabei nicht wesentlich zur Erwärmung des Heizkörpers bei.

Die JP-A-06-123249 offenbart eine Kraftstoffheizung, bei der der Kraftstoff über einen Heizkörper erwärmt wird. Der aufgenommene Strom wird mittels eines Stromsensors erfasst, so dass festgestellt werden kann, ob der Heizkörper die Aufwärmphase beendet hat.

Die US-A-5 451 747 befasst sich mit einer Heizdecke, die mit drahtförmigen Heizkörpern versehen ist. Eine Sicherheitsschaltung unterbricht die Energieversorgung der Heizdecke im Falle eines Kurzschlusses oder einer Kontaktunterbrechung.

Die JP-A-07-014661 zeigt eine Sicherheitsschaltung für einen Heizkörper, durch die sowohl ein Kurzschluss als auch eine Unterbrechung der Stromzufuhr detektiert werden kann.

Die US-A-5 272 499 sieht einen Durchlauferhitzer mit Heizkörpern vor, wobei der Strom durch die Heizkörper überwacht wird, um anzuzeigen, wenn die Heizkörper verkalkt sind.

Eine weitere Verkalkungsanzeige ist aus der US-A-4 292 499 bekannt. Hierbei werden die Unterschiede der durch zwei parallel geschaltete Heizkörper fließenden Ströme ausgewertet.

In der US-A-3 584 196 ist eine Heizeinrichtung zum Kochen gezeigt, bei der dem Heizkörper ein PTC-Widerstand vorgeschaltet ist. Über die aneinander angepassten Spannungs-Strom-Kurven des PTC-Widerstandes und des Heizkörpers wird die Heizleistung in Abhängigkeit von der Heizspannung automatisch reguliert. Derartige Anordnungen sind auch aus der oben genannten US-A-481 842 sowie der GB-A-2 358 530, der JP-A-2000-260553, der WO-A-86/01064, der US-A-3 737 622 und der DE-A-3138547 bekannt.

Wie aus dem oben genannten Stand der Technik hervorgeht, ist eine Vielzahl von verschiedenen Bauformen zur Funktionsüberwachung von Heizelementen möglich. Die aus der US-A-5 770 836, der US-A-6 080 973, der US-A-4 736 091, der JP-A-06-123249, der US-A-545 747 und dem nächstkommenden Stand der Technik, der JP-A-07-014661, bekannten Vorrichtungen zur Überwachung von Heizelementen weisen zum einen einen recht aufwendigen Schaltungsaufbau auf, zum anderen ermöglichen sie keine kompakte, leicht zu fertigende Bauweise.

Der Erfindung liegt daher die Aufgabe zugrunde, ein Heizelement zu schaffen, das insbesondere zur Beheizung von Fluiden geeignet ist und bei kleinen Abmessungen einfach zu montieren ist.

Diese Aufgabe wird erfindungsgemäß für ein Heizelement der eingangs genannten Art dadurch gelöst, dass in das Heizelement ein als Widerstandsdraht ausgebildeter, elektrisch in Reihe mit dem wenigstens einen Heizkörper geschalteter Widerstand integriert ist und dass wenigstens ein von außerhalb des Heizelements zugänglich angeordneter, mit einem Ende des Widerstands verbundener Messkontakt vorgesehen ist, an dem der Spannungsabfall am Widerstand oder ein für den Spannungsabfall am Widerstand repräsentatives Signal abgreifbar ist.

Durch diese überraschend einfache Lösung ist es möglich, ein kompaktes Heizelement mit geringen Abmessungen zu bauen, das gleichzeitig eine Funktionsüberwachung des Heizkörpers ermöglicht. Die kompakte Bauform wird dadurch erreicht, dass der Widerstand in das Heizelement integriert ist, also mit dem Heizelement eine bauliche, einstückig handhabbare und vormontierte Baueinheit bildet. Die Funktionsüberwachung wird über den wenigstens einen Messkontakt ermöglicht, an dem im Betrieb des Heizelements der Spannungsabfall am Widerstand durch übliche Spannungsmesser überwacht werden kann. Da der Widerstand elektrisch in Reihe mit dem Heizkörper geschaltet ist, beschränkt sich der Schaltplan auf einfachste Anordnungen.

Sinkt der Spannungsabfall am Widerstand auf Null ab, so bedeutet dies, dass der Stromfluss durch den Heizkörper unterbrochen ist. Steigt dagegen der Spannungsabfall über den Widerstand auf einen Wert an, der höher ist als ein im normalen Betrieb gemessener Spannungsabfall, so bedeutet dies, dass über einen Kurzschluss im Heizelement ein erhöhter Strom fließt. In beiden Fällen lässt sich über eine Veränderung des Spannungsabfalls eine Betriebsstörung erkennen. Da sowohl eine Unterbrechung des Stromflusses, beispielsweise durch einen Kontaktbruch, als auch eine Erhöhung des Stromflusses, beispielsweise durch einen Kurzschluss, zu einem schwerwiegenden Defekt führen können, wird durch die erfindungsgemäße Ausgestaltung des Heizelements die Betriebssicherheit erhöht.

In der Praxis kann die Überwachung des Spannungsabfalls und die Ausgabe von A-larmsignalen bei Vorliegen einer Betriebsstörung auf einfache Weise dadurch implementiert werden, dass bei Unterschreiten eines ersten vorgegebenen Grenzwertes für den Spannungsabfall ein einen Unterbrechungsalarm repräsentierendes Alarmsignal und bei Überschreiten eines zweiten Grenzwertes für den Spannungsabfall ein einen Kurzschluss repräsentierendes Alarmsignal ausgegeben wird. Die beiden Grenzwerte liegen dabei vorzugsweise unterhalb bzw. oberhalb der im normalen Betrieb auftretenden Schwankungen des Spannungsabfalls am Widerstand.

Eine besonders kompakte Bauweise des Heizelements lässt sich erfindungsgemäß dadurch erreichen, dass der Widerstand als ein Widerstandsdraht, z. B. als Flach- oder Runddraht, ausgeführt ist. Im Gegensatz zu anderen Bauformen des Widerstandes, wie beispielsweise einem Schichtwiderstand, lassen sich durch den Widerstandsdraht auch bei hohen Heizströmen kleinste Bauhöhen und Baugrößen realisieren, so dass die erfindungsgemäße Ausgestaltung mit einem in Reihe geschalteten, in das Heizelement integriertem Widerstand ohne große Änderungen in bereits vorhandene Heizelemente eingebaut werden kann. Der Widerstand ist so gering, dass er die Heizleistung nicht beeinflusst, jedoch einen für die Messfunktion genügend großen Spanungsabfall verursacht.

Um die elektrische Energie dem Heizkörper zuzuführen, kann dieser zwischen zwei Kontaktkörpern angeordnet sein, wobei der Widerstand an einem der Kontaktkörper vorzugsweise fixiert ist. Um hohe Produktionszahlen bei niedrigen Fertigungskosten zu erreichen, ist der Widerstand vorzugsweise mittels Schweißen, beispielsweise Laserschweißen oder Stromschweißen, oder durch Klemmen oder Crimpen befestigt. Zwar können auch Lötverfahren zur Befestigung des Widerstandsdrahtes verwendet werden, jedoch sind diese zum Teil wegen der komplizierten Temperaturführungen recht aufwendig.

Der Kontaktkörper kann im Wesentlichen platten- oder scheibenförmig, vorzugsweise in Form eines Kontaktbleches, ausgestaltet sein. Der Kontaktkörper kann gleichzeitig als eine Wärmesenke ausgestaltet sein, welche die vom Heizkörper produzierte Wärme gleichmäßig über eine größere Fläche verteilt und somit einen verbesserten Wärmeübergang in Richtung des zu heizenden Fluids ermöglicht.

Ein Kontaktkörper, insbesondere der in Richtung der Energiezufuhr vor dem wenigstens einen Heizkörper liegende Kontaktkörper, kann in zwei elektrisch isolierte Kontaktkörper geteilt sein, die von dem Widerstand überbrückt sind. Der eine, erste Kontaktkörper kann dabei den Widerstand und den Heizkörper kontaktieren und mit dem wenigstens einen Messkontakt elektrisch leitend verbunden sein. Der Messkontakt kann dabei in einer Weiterbildung an dem ersten Kontaktkörper angeformt sein. Ein weiterer Messkontakt kann an dem anderen, zweiten Kontaktkörper angeformt sein, wobei der andere, zweite Kontaktkörper einen Energieversorgungskontakt und den Widerstand kontaktieren kann.

Die Kontaktkörper können den Heizkörper und den Widerstand insbesondere gehäuseartig umschließen und somit eine Doppelfunktion auch hinsichtlich des Schutzes der Bauelemente des Heizelements ausüben. Die Kontaktkörper können mit dem wenigstens einen Heizkörper ferner zu einem Stapel zusammengefasst sein.

Um die bauliche Integrität des Heizelements herzustellen, können ferner die Kontaktkörper durch wenigstens ein elektrisch isolierendes Formschlusselement, beispielsweise Kunststoffnieten, miteinander verbunden sein.

In dem Heizelement kann ferner eine elektronische Auswerteinheit integriert sein, durch welche in Abhängigkeit vom Spannungsabfall an dem Widerstand ein Alarmsignal, das repräsentativ für eine Betriebsstörung im Heizelement ist, an den wenigstens einen Messkontakt ausgebbar ist.

Im Folgenden wird die Erfindung anhand eines Ausführungsbeispiels mit Bezug auf die Zeichnungen skizziert. Wie aus der obigen Beschreibung der mit den einzelnen erfindungsgemäßen Optionen verbundenen Vorteile hervorgeht, können dabei einzelne Merkmale, die bei dem beschriebenen Ausführungsbeispiel vorhanden sind, auch weggelassen werden, wenn der mit diesem Merkmal verbundene Vorteil im konkreten Anwendungsfall nicht unmittelbar benötigt wird.

Es zeigen:
- Fig. 1: eine schematische Perspektivansicht eines Ausführungsbeispiels eines erfin- dungsgemäßen Heizelements;
- Fig. 2: eine weitere schematische Perspektivansicht des Ausführungsbeispiels der Fig. 1;
- Fig. 3: eine schematische Perspektivansicht des inneren Aufbaus des Ausführungsbei- spiels der Fig. 1;
- Fig. 4: eine schematische Perspektivdarstellung des inneren Aufbaus einer ersten Vari- ante des Ausführungsbeispiels der Fig. 1;
- Fig. 5: eine schematische Perspektivdarstellung des inneren Aufbaus einer zweiten Va- riante des Ausführungsbeispiels der Fig. 1.

In der folgenden Beschreibung werden für Elemente und Merkmale, die bei den unterschiedlichen Figuren und Varianten die gleiche oder ähnliche Funktion und/oder den gleichen oder ähnlichen Aufbau aufweisen, die selben Bezugszeichen verwendet.

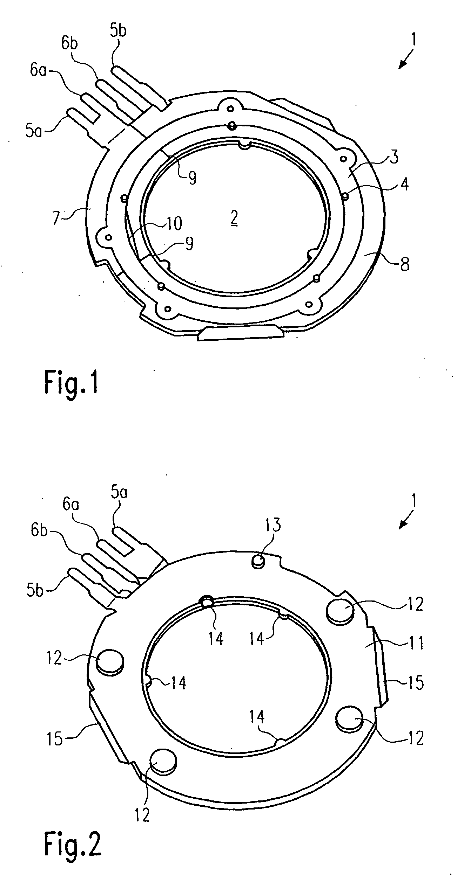

Fig. 1 zeigt ein Ausführungsbeispiel eines erfindungsgemäßen Heizelements 1 in einer schematischen Perspektivdarstellung in einer Ansicht auf eine erste Stirnfläche des Heizelements 1. Das Heizelement 1 dient zum Beheizen eines von Blow-by-Gas durchströmten Druckregelventils, welches in Kraftfahrzeuge eingebaut ist.

Wie in Fig. 1 zu erkennen ist, ist das beschriebene Heizelement 1 im Wesentlichen als eine ringförmige Scheibe ausgestaltet und bildet eine zentrale Öffnung 2 aus, in der beispielsweise eine Fluidleitung aufgenommen ist. Hinsichtlich des Aufbaus des Heizelements wird ergänzend zu der nachfolgenden Beschreibung auf die EP-A-1 314 863 verwiesen, auf deren Inhalt im gesamten Umfang hiermit Bezug genommen wird.

Das Heizelement 1 weist eine Haltestruktur 3 auf, durch welche die Einteiligkeit des Heizelements 1 sichergestellt ist und an der die einzelnen Bauelemente befestigt sind. Die Haltestruktur 3 ist bei dem beschriebenen Ausführungsbeispiel als ein Kunststoffring ausgeführt, an dem Befestigungsmittel, wie Kunststoffnieten, und Zentrier- und Haltemittel 4 in Form von Zapfen angeformt sind.

Das Heizelement 1 weist Energieversorgungskontakte 5a, 5b beispielsweise in Form von Kontaktfahnen oder Kontaktstiften auf, über die Energie in Form von elektrischem Strom zugeführt werden kann. Die Energieversorgungskontakte 5a, 5b bilden vorzugsweise Steckerkontakte aus.

Das Heizelement 1 weist ferner zwei Messkontakte 6a, 6b auf, von denen einer, der Messkontakt 6a, direkt mit dem einen Energieversorgungskontakt 5a verbunden ist, so dass am Messkontakt 6a und am Energieversorgungskontakt 5a das gleiche Signal anliegt. An den Messkontakten 6a, 6b lässt sich ein für den Betriebszustand des Heizelements 1 repräsentatives Signal abgreifen, wie weiter unten erläutert ist.

Sämtliche Kontakte 5a, 5b, 6a, 6b sind von außen zugänglich angeordnet und können, wie in Fig. 1 gezeigt, nebeneinander liegen, so dass sie von einem Stecker gleichzeitig kontaktiert werden können. Je nach Einbausituation können die Kontakte allerdings auch in Umfangsrichtung verteilt sein. Der Energieversorgungskontakt 5a setzt sich in einem ersten, bogen- bzw. kreissegmentförmigen Kontaktkörper 7 fort, der als platten- oder scheibenförmiges Kontaktblech ausgestaltet sein kann. In Umfangsrichtung zu wenigstens einer Seite des ersten Kontaktkörpers 7 ist ein zweiter Kontaktkörper 8 angeordnet, der bis auf eine unterschiedliche Erstreckung in Umfangsrichtung des ringförmigen Heizelements 1 im Wesentlichen ähnlich zu dem Kontaktkörper 7 aufgebaut ist. Der Kontaktkörper 8 kann ebenfalls als Kontaktblech gefertigt sein. Der Kontaktkörper 8 setzt sich einstückig bis zu dem Messkontakt 6b fort.

Die beiden Kontaktkörper 7 und 8 sind voneinander elektrisch isoliert, indem zwischen ihnen ein mit einem elektrisch nicht leitenden Stoff, wie einem Kunststoff-Isolator oder Luft, gefüllter Spalt 9 vorgesehen ist. Zusammen erstrecken sich die beiden Kontaktkörper 7 und 8 über den gesamten Umfang des Heizelements. Insbesondere können die Kontaktkörper ein Gehäuse ausbilden, das die im Inneren des Heizelements 1 liegenden Bauelemente schützt.

Im Kontaktkörper 7 kann eine Aussparung 10 vorgesehen sein, in der ein Isolierkörper aufgenommen ist, wie weiter unten beschrieben ist.

In Fig. 2 ist eine perspektivische Ansicht auf diejenige Stirnfläche des Heizelements 1 dargestellt, die der in Fig. 1 dargestellten Stirnfläche in axialer Richtung gegenüberliegt.

An dieser Seite ist ein dritter Kontaktkörper 11 zu erkennen, der sich einstückig im Kontaktabschnitt 5b fortsetzt. Der Kontaktkörper 11 erstreckt sich in Umfangsrichtung des Heizkörpers 1 um die gesamte zentrale Öffnung 2 und bildet, wie die Kontaktkörper 7 und 8, ein Gehäuse aus. Der Kontaktkörper 11 ist als Kontaktblech gefertigt.

Die Kontaktkörper 7, 8 und 11 können gestanzt und tiefgezogen aus einem Blech hergestellt sein.

In Fig. 2 sind ferner formschlüssige Befestigungsmittel 12, 13, hier in Form von Kunststoffnieten, zu erkennen. Die Kunststoffnieten 12, 13 sind am Haltering 3 einstückig angeformt und setzen sich in axialer Richtung durch das gesamte Heizelement 1 fort. Der bzw. die Kunststoffnieten 12 befestigen dabei den einen Kontaktkörper 8 an dem Kontaktkörper 11, der bzw. die Kunststoffnieten 13 den Kontaktkörper 7 am Kontaktkörper 11.

Um die Ausrichtung der Kontaktkörper 7, 8 und 11 während der Montage zu erleichtern, können sie an vorbestimmten Stellen Positionierhilfen 14 in Form von Vorsprüngen und Einbuchtungen aufweisen. Die Kontaktkörper 7, 8 und 11 können ferner an wenigstens einem ihrer Ränder jeweils mit umgebogenen Befestigungslaschen 15 versehen sein, die in axialer Richtung den jeweils gegenüberliegenden Kontaktkörper umgreifen und das Heizelement in axialer Richtung 1 zusammenhalten. Alternativ können die Laschen 15 auch als Rastlaschen mit einem Rastvorsprung (nicht gezeigt) ausgestaltet sein, in die jeweils der gegenüberliegende Ring in axialer Richtung einschnappt.

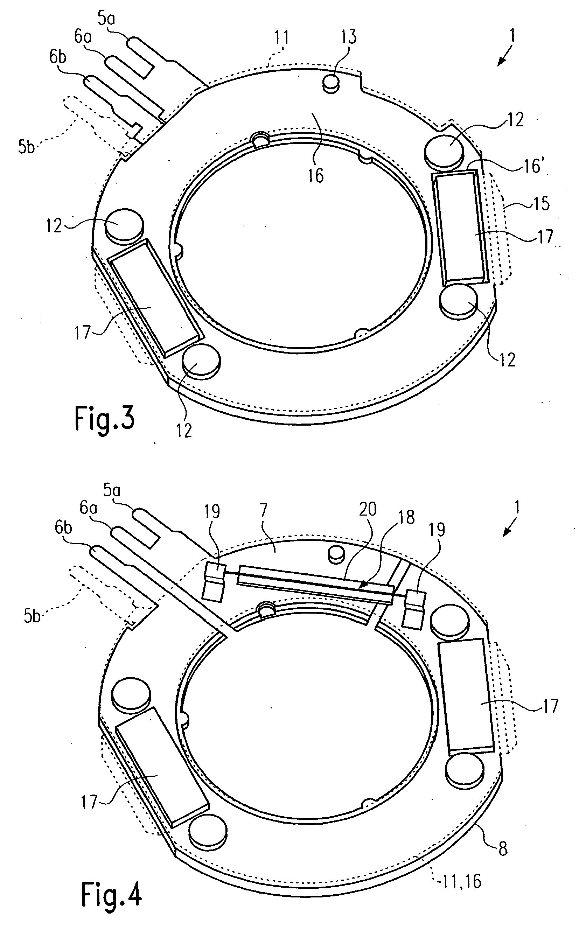

Fig. 3 zeigt das Heizelement 1 in derselben perspektivischen Darstellung wie Fig. 2, wobei jedoch der Kontaktkörper 11 durchsichtig dargestellt und in doppelt punktierten Linien wiedergegeben ist. Wie zu erkennen ist, ist zwischen den Kontaktkörpern 7, 8 auf der einen Stirnseite des Heizelements 1 einerseits und dem Kontaktkörper 11 auf der anderen Stirnseite des Heizelements 1 andererseits ein Positionierelement 16 (beispielsweise in Ringform) angeordnet. Der Positionierring 16 ist mit Aussparungen für die Nieten 12, 13 versehen.

Ferner ist zu erkennen, dass zwischen den Kontaktkörpern 7, 8 einerseits und dem Kontaktkörper 11 andererseits zwei Heizkörper 17 in Form von PTC-Elementen angeordnet sind, deren Lage im Heizelement durch entsprechende Ausnehmungen 16' im Positionierelement 16 fixiert ist, in die die Heizkörper 17 eingelegt sind. Das Positionierelement 16 ist vorzugsweise aus einem elektrisch isolierenden Material gefertigt. Die Lage des Positionierelements 16 kann durch die Laschen 15 und/oder die Befestigungsmittel 12, 13 festgelegt sein. Seine Dicke in axialer Richtung des Heizelements 1 entspricht in etwa der Dicke der Heizkörper 17. An der in Fig. 3 abgewandten Seite des Positionierelements 16 liegen in axialer Richtung die Kontaktkörper 7, 8 an.

Folglich ergibt sich für das Heizelement 1 ein schicht- bzw. sandwichartiger Aufbau aus dem Kontaktkörper 11, an den sich der Positionierring 16 und dann die Kontaktkörper 7, 8 anschließen. Wie bereits erläutert wird der Stapel aus den Kontaktkörper 7, 8 und 11 sowie dem Positionierring mitsamt den Heizkörpern 17 durch die Laschen 15 und/oder Nieten 12, 13 zusammengehalten. Die Breite des Kontaktkörpers 7, 8 und/oder 11 entspricht in etwa, vorzugsweise wenigstens, der Breite des Heizkörpers 17, so dass der Kontaktkörper 7, 8 und/oder 11 den Heizkörper im Wesentlichen vollflächig bedecken kann. Die Kontaktkörper 7 und 8 sind vorzugsweise so bemessen, dass sie in Kombination wenigstens den Heizkörper 17 überdecken, wobei der Kontaktkörper 7 vom Heizkörper 17 elektrisch isoliert ist.

Fig. 4 zeigt das Heizelement 1 in der perspektivischen Darstellung der Fig. 3, wobei jedoch sowohl das Kontaktelement 11 als auch der Positionierring 16 durchsichtig und in doppelt punktierten Linien dargestellt sind, um den Blick auf die innenliegenden Bauteile des Heizelements 1 freizugeben.

Wie in Fig. 4 zu erkennen ist, sind die Kontaktkörper 7, 8 über einen Widerstand 18 miteinander verbunden, dessen eines Ende am Kontaktkörper 7 und dessen anderes Ende am Kontaktkörper 8 elektrisch leitend fixiert ist und der zwischen dem einen Energieversorgungskontakt 5a und den Heizkörpern 17 angeordnet ist. Bei der Ausführungsform der Fig. 4 ist der Widerstand 18 als ein Widerstandsdraht augestaltet, dessen beide Enden festgeklemmt bzw. gecrimpt sind. Hierzu sind aus den jeweiligen Kontaktkörpern 7, 8 Laschen 19 ausgestanzt und unter Festklemmung der Enden des Widerstandes 18 zum jeweiligen Kontaktkörper 7, 8 zurückgebogen.

Zwischen dem Widerstandsdraht 18 und den Kontaktkörpern 7, 8 ist eine Isolierschicht 20 angebracht, die verhindert, dass bei Erschütterungen des Heizelements 1 der Draht 18 die Kontaktkörper 7, 8 entlang seiner Längsrichtung kontaktiert und sich so sein Widerstand verringert. Die Isolierschicht 20 kann, damit sich die axiale Baudicke des Heizelements 1 nicht unnötig vergrößert, in eine entsprechende Ausnehmung des Kontaktkörpers 7, 8 eingesetzt sein. Alternativ kann als Isolierschicht 20 auch eine zwischengelegte oder zwischengeklebte Folie verwendet werden. Ebenso kann die Isolierschicht auch als Teil der Haltestruktur 3 ausgebildet sein.

Das erfindungsgemäße Heizelement 1 funktioniert wie folgt: Der Energieversorgungskontakt 5a wird mit einer Spannungsquelle, der Energieversorgungskontakt 5b beispielsweise mit der Masse verbunden. Der Heizstrom fließt dann vom Energieversorgungskontakt 5a zum ersten Kontaktkörper 7. Da der Kontaktkörper 7 elektrisch isoliert von den übrigen beiden Kontaktkörpern 8, 11 sowie vom Heizkörper 17 im Heizelement 1 angeordnet ist, fließt der Strom weiter über den Widerstand 18 zu dem zweiten Kontaktkörper 8, der mit den Heizkörpern 17 elektrisch leitend verbunden ist, indem die Heizkörper 17 an den Kontaktkörper 8 gedrückt sind. Der Widerstand 18 ist also in Reihe mit den Heizkörpern 17 und in Stromrichtung vor die Heizkörper 17 geschaltet.

Vom Kontaktkörper 8 fließt der Heizstrom durch die Heizkörper 17 zum Kontaktkörper 11, der ebenfalls mit den Heizkörpern 17 leitend verbunden ist, indem diese an den Kontaktkörper 11 gepresst sind. Vom Kontaktkörper 11 fließt der Heizstrom schließlich über den Energieversorgungskontakt 5b ab.

An den Messkontakten 6a, 6b kann der Spannungsabfall am Widerstand 18 abgegriffen werden, da die beiden Messkontakte direkt mit den Enden des Widerstandes verbunden sind: Der Kontaktkörper 7 ist direkt mit dem Messkontakt 6a und der Kontaktkörper 8 direkt mit dem Messkontakt 6b verbunden. Zwischen den Messkontakten 6a und dem Messkontakt 6b liegt folglich der Spannungsabfall an, der zwischen den Kontaktkörpern 7 und 8 auftritt. Da die Kontaktkörper 7, 8 über den Widerstand 18 miteinander verbunden sind, entspricht dieser Spannungsabfall dem Spannungsabfall am Widerstand 18.

Tritt innerhalb des Heizelements 1 ein Kurzschluss auf oder ist die Stromzufuhr unterbrochen, so ändert sich der Spannungsabfall über die Messkontakte 6a, 6b, wobei entweder ein erster vorbestimmter Grenzwert für den Spannungsabfall unterschritten oder ein zweiter vorbestimmter Grenzwert für den Spannungsabfall überschritten wird. Der Spannungsabfall am Widerstand 18 ist also ein für eine Betriebsstörung des Heizelements repräsentatives Signal. Wird ein solches Überschreiten eines der beiden Grenzwerte detektiert, so gibt die mit den Messkontakten 6a, 6b verbundene Messeinrichtung ein Alarmsignal aus, das auf eine Betriebsstörung im Heizelement 1 hinweist.

Die Grenzwerte, die zu dem Alarmsignal führen, können auf einfache Weise durch Versuche bestimmt werden, in denen mechanische Versagensfälle nachgestellt werden und der Spannungsabfall über den Widerstand 18 gemessen und mit dem im normalen Betriebszustand auftretenden Spannungsabfall verglichen wird. Im Betrieb sind die Messkontakte 6a, 6b mit einer externen Schaltung zur Überwachung der Differenzspannung zwischen den Messkontakten 6a, 6b verbunden.

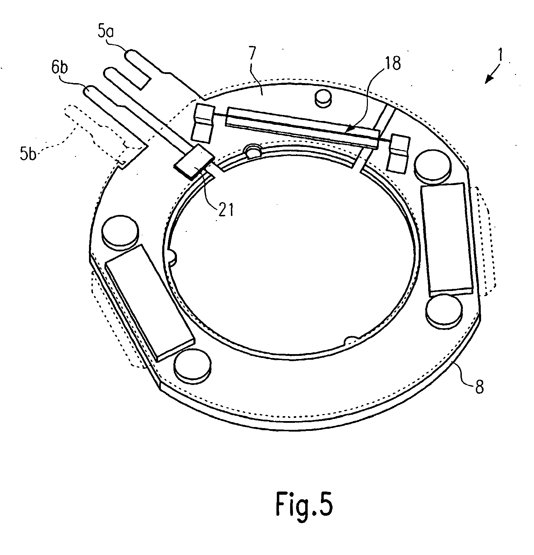

Fig. 5 zeigt eine Variante der Ausführungsform der Fig. 4, bei der die Überwachungseinrichtung 21 in das Heizelement 1 integriert ist. Die Überwachungseinrichtung 21 wird vom Heizstrom an den Energieversorgungskontakten 5a, 5b mit Energie versorgt und misst den Spannungsabfall zwischen den Kontaktkörpern 7, 8. Überschreitet bzw. unterschreitet der Spannungsabfall vorbestimmte, in der Überwachungseinrichtung abgespeicherte oder durch Schaltungen realisierte Grenzwerte, so wird auf den Messkontakt 6b eine Spannung gelegt, die als Alarmsignal dient und beispielsweise eine optische Anzeige betätigt. Die Überwachungseinrichtung 21 kann in Form einfacher Dioden oder eines handelsüblichen integrierten Schaltkreises zur Spannungsüberwachung ausgeführt sein.

Selbstverständlich sind Abweichungen von der beschriebenen Ausführungsform und ihren Varianten möglich. So ist die Zahl der im Heizelement 1 vorgesehen Heizkörper 17 im Wesentlichen beliebig, wobei jedoch wenigstens ein Heizkörper 17 vorgesehen ist. Ebenso kann der Energieversorgungskontakt 5a und der Messkontakt 6a zu einem einzigen Kontakt zusammengefasst sein.

Ferner ist die Realisierung des erfindungsgemäßen Heizelements 1 nicht auf eine ringförmige Ausgestaltung des Heizelements beschränkt, sondern kann auch bei einem Heizelement 1 verwendet werden, das keine zentrale Öffnung 2 sondern Kontaktkörper 7 mit im Wesentlichen durchgängiger Grundfläche, ohne Öffnung 2, aufweist und das zu einem Stapel mit wenigstens einem dazwischenliegendem Heizkörper und dazwischenliegendem Widerstand 18, durch den zwei Kontaktkörper 7, 8 überbrückt sind, zusammengefügt ist. Die Grundfläche des Heizelements kann gebogen, beispielsweise kreis- oder ellipsenförmig, oder recht- oder vieleckig sein und mit oder ohne einen oder mehreren zentralen Öffnungen 2 ausgestaltet sein.

Alternativ können durch die erfindungsgemäße Heizvorrichtung 1 neben Blow-by-Gasen auch brennbare Fluide, wie z. B. Dieselkraftstoffe beheizt werden.

## Patentansprüche

1. Heizelement (1) für Fluide mit wenigstens einem als PTC-Element ausgestalteten elektrischen Heizkörper (17), der über von außerhalb des Heizelements (1) zugänglich angeordnete Energieversorgungskontakte (5a, 5b) mit elektrischer Energie versorgbar ist, **dadurch gekennzeichnet, dass** in das Heizelement (1) ein als Widerstandsdraht ausgebildeter, elektrisch in Reihe mit dem wenigstens einen Heizkörper (17) geschalteter Widerstand (18) integriert ist, und dass wenigstens ein von außerhalb des Heizelements zugänglich angeordneter Messkontakt (6b) vorgesehen ist, an dem der Spannungsabfall am Widerstand oder ein für den Spannungsabfall am Widerstand (18) repräsentatives Signal (18) abgreifbar ist.

2. Heizelement (1) nach Anspruch 1, **dadurch gekennzeichnet, dass** der mindestens eine Heizkörper (17) zwischen zwei Kontaktkörpem (7, 8, 11) angeordnet ist und dass der Widerstand an einem der Kontaktkörper (8) fixiert ist.

3. Heizelement (1) nach Anspruch 2, **dadurch gekennzeichnet, dass** wenigstens einer der Kontaktkörper (7, 8 11) im Wesentlichen platten- oder scheibenförmig ausgestaltet ist.

4. Heizelement (1) nach einem der oben genannten Ansprüche, **dadurch gekennzeichnet, dass** der Widerstand (18) zwei voneinander elektrisch isolierte Kontaktkörper (7, 8) überbrückt und dass einer der Kontaktkörper (8) den wenigstens einen Heizkörper (17) kontaktiert.

5. Heizelement (1) nach Anspruch 4, **dadurch gekennzeichnet, dass** der eine Kontaktkörper (8) den Widerstand (18) und den Heizkörper (17) kontaktiert und mit dem Messkontakt (6b) elektrisch leitend verbunden ist.

6. Heizelement (1) nach Anspruch 5, **dadurch gekennzeichnet, dass** der Messkontakt (6b) an dem einen Kontaktkörper (8) einstückig angeformt ist.

7. Heizelement (1) nach einem der Ansprüche 4 bis 6, **dadurch gekennzeichnet, dass** der andere Kontaktkörper (7) sich zwischen dem Energieversorgungskontakt (5a) und dem Widerstand (18) erstreckt.

8. Heizelement (1) nach einem der Ansprüche 4 bis 7, **dadurch gekennzeichnet, dass** der andere Kontaktkörper (7) mit wenigstens einem weiteren Messkontakt (6a) elektrisch leitend verbunden ist.

9. Heizelement (1) nach Anspruch 8, **dadurch gekennzeichnet, dass** der weitere Messkontakt (6a) an dem anderen Kontaktkörper (7) einstückig angeformt ist.

10. Heizelement (1) nach einem der oben genannten Ansprüche, **dadurch gekennzeichnet, dass** einer der Energieversorgungskontakte (5a) einteilig mit dem Messkontakt (6a) ausgestaltet ist.

11. Heizelement (1) nach einem der Ansprüche 3 bis 10, **dadurch gekennzeichnet, dass** der wenigstens eine Heizkörper (17) und der Widerstand (18) von den Kontaktkörpern (7, 8, 11) gehäuseartig umschlossen ist.

12. Heizelement (1) nach einem der Ansprüche 3 bis 10, **dadurch gekennzeichnet, dass** die Kontaktkörper (7, 8, 11) mit dem wenigstens einen Heizkörper (17) stapelförmig zusammengefasst sind.

13. Heizelement (1) nach einem der oben genannten Ansprüche, **dadurch gekennzeichnet, dass** eine elektronische Überwachungseinheit (21) in das Heizelement (1) integriert ist, durch die der Spannungsabfall am Widerstand (18) erfassbar und in Abhängigkeit vom Spannungsabfall ein für den Betriebszustand des Heizelements (1) repräsentatives Signal an den Messkontakt (6b) ausgebbar ist.

14. Verfahren zum Beheizen eines Fluids, wobei ein Heizelement mit wenigstens einem elektrischen Heizkörper mit elektrischer Energie versorgt wird und seine Wärmeenergie an das Fluid abgibt, **dadurch gekennzeichnet, dass** die Funktion des Heizelements in Abhängigkeit vom Spannungsabfall an einem in Reihe mit dem wenigstens einen elektrischen Heizkörper geschalteten, in das Heizelement integrierten Widerstandes überwacht wird.

15. Verfahren nach Anspruch 14, **dadurch gekennzeichnet, dass** ein Alarmsignal ausgegeben wird, wenn der Spannungsabfall am Widerstand einen vorbestimmten Grenzwert überschreitet.

16. Verfahren nach Anspruch 14 oder 15, **dadurch gekennzeichnet, dass** das Alarmsignal ausgegeben wird, wenn der Spannungsabfall einen vorbestimmten Grenzwert überschreitet.

## Claims

1. Heating element (1) for fluids comprising at least one electrical heating body (17) in the form of a PTC element, which may be supplied with electrical energy via energy supply contacts (5a, 5b) disposed accessibly outside the heating element (1), **characterised in that** a resistor (18) in the form of a resistance wire connected electrically in series with the at least one heating body (17) is incorporated in the heating element (1), and **in that** at least one measuring contact (6b) is provided disposed accessibly from the outside of the heating element, at which measuring contact the voltage drop at the resistor or a signal (18) representing the voltage drop at the resistor (18) may be picked up.

2. Heating element (1) according to claim 1, **characterised in that** the at least one heating body (17) is disposed between two contact bodies (7, 8, 11) and **in that** the resistor is fixed to one of the contact bodies (8).

3. Heating element (1) according to claim 2, **characterised in that** at least one of the contact bodies (7, 8, 11) is formed substantially as a plate or disc.

4. Heating element (1) according to one of the preceding claims, **characterised in that** the resistor (18) bridges two contact bodies (7, 8) which are electrically insulated from one another and **in that** one of the contact bodies (8) makes contact with the at least one heating body (17).

5. Heating element (1) according to claim 4, **characterised in that** the one contact body (8) makes contact with the resistor (18) and the heating body (17) and is electrically conductively connected to the measuring contact (6b).

6. Heating element (1) according to claim 5, **characterised in that** the measuring contact (6b) is integrally formed with the one contact body (8).

7. Heating element (1) according to one of claims 4 to 6, **characterised in that** the other contact body (7) extends between the energy supply contact (5a) and the resistor (18).

8. Heating element (1) according to one of claims 4 to 7, **characterised in that** the other contact body (7) is connected electrically conductively to at least one further measuring contact (6a).

9. Heating element (1) according to claim 8, **characterised in that** the further measuring contact (6a) is integrally formed with the other contact body (7).

10. Heating element (1) according to one of the preceding claims, **characterised in that** one of the energy supply contacts (5a) is formed integrally with the measuring contact (6a).

11. Heating element (1) according to one of claims 3 to 10, **characterised in that** the at least one heating body (17) and the resistor (18) are enclosed in the manner of a housing by the contact bodies (7, 8, 11).

12. Heating element (1) according to one of claims 3 to 10, **characterised in that** the contact bodies (7, 8, 11) are assembled in the form of a stack with the at least one heating body (17).

13. Heating element (1) according to one of the preceding claims, **characterised in that** an electronic monitoring unit (21) is incorporated in the heating element (1), by means of which the voltage drop at the resistor (18) may be detected, and according to the voltage drop a signal may be transmitted to the measuring contact (6a) representing the operating state of the heating element (1).

14. Method of heating a fluid, wherein a heating element having at least one electrical heating body is supplied with electrical energy and gives off its heat energy to the fluid, **characterised in that** the function of the heating element according to the voltage drop at a resistor incorporated in the heating element and connected in series with the at least one electrical heating body is monitored.

15. Method according to claim 14, **characterised in that** an alarm signal is transmitted if the voltage drop at the resistor exceeds a predetermined limit value.

16. Method according to claim 14 or 15, **characterised in that** the alarm signal is transmitted if the voltage drop exceeds a predetermined limit value.

## Revendications

1. Elément de chauffage (1) pour fluides, comportant au moins un corps de chauffage électrique (17) agencé sous la forme d'un élément à coefficient de température positive, lequel peut être alimenté en énergie électrique par l'intermédiaire de contacts d'alimentation en énergie (5a, 5b) accessibles à partir de l'extérieur de l'élément de chauffage (1), **caractérisé en ce qu'**une résistance (18) réalisée sous la forme d'un fil de résistance, qui est couplée en série avec l'au moins un corps de chauffage (17), est intégrée dans l'élément de chauffage (1), et **en ce qu'**il est prévu au moins un contact de mesure (6b) accessible à partir de l'extérieur de l'élément de chauffage, sur lequel peut être prélevée la chute de tension au niveau de la résistance ou un signal (18) représentatif pour la chute de tension au niveau de la résistance (18).

2. Elément de chauffage (1) selon la revendication 1, **caractérisé en ce que** l'au moins un corps de chauffage (17) est disposé entre deux corps de contact (7, 8, 11), et **en ce que** la résistance est fixée sur l'un des corps de contact (8).

3. Elément de chauffage (1) selon la revendication 2, **caractérisé en ce que** l'un au moins des corps de contact (7, 8, 11) est pour l'essentiel agencé en forme de plaque ou de disque.

4. Elément de chauffage (1) selon l'une quelconque des revendications précédentes, **caractérisé en ce que** la résistance (18) ponte deux corps de contact (7, 8) isolés électriquement l'un par rapport à l'autre, et **en ce qu'**un des corps de contact (8) établit le contact avec l'au moins un corps de chauffage (17).

5. Elément de chauffage (1) selon la revendication 4, **caractérisé en ce qu'**un des corps de contact (8) établit le contact avec la résistance (18) et le corps de chauffage (17), et est relié de façon électriquement conductrice au contact de mesure (6b).

6. Elément de chauffage (1) selon la revendication 5, **caractérisé en ce que** le contact de mesure (6b) est formé d'un seul tenant sur un des corps de contact (8).

7. Elément de chauffage (1) selon l'une quelconque des revendications 4 à 6, **caractérisé en ce que** l'autre corps de contact (7) s'étend entre le contact d'alimentation en énergie (5a) et la résistance (18).

8. Elément de chauffage (1) selon l'une quelconque des revendications 4 à 7, **caractérisé en ce que** l'autre corps de contact (7) est relié de façon électriquement conductrice à au moins un autre contact de mesure (6a).

9. Elément de chauffage (1) selon la revendication 8, **caractérisé en ce que** l'autre contact de mesure (6a) est formé d'un seul tenant sur l'autre corps de contact (7).

10. Elément de chauffage (1) selon l'une quelconque des revendications précédentes, **caractérisé en ce que** l'un des contacts d'alimentation en énergie (5a) est agencé d'un seul tenant avec le contact de mesure (6a).

11. Elément de chauffage (1) selon l'une quelconque des revendications 3 à 10, **caractérisé en ce que** les corps de contact (7, 8, 11) entourent l'au moins un corps de chauffage (17) et la résistance (18) comme un boîtier.

12. Elément de chauffage (1) selon l'une quelconque des revendications 3 à 10, **caractérisé en ce que** les corps de contact (7, 8, 11) sont assemblés en forme de pile avec l'au moins un corps de chauffage (17).

13. Elément de chauffage (1) selon l'une des revendications précédentes, **caractérisé en ce qu'**une unité de surveillance électronique (21) est intégrée dans l'élément de chauffage (1), laquelle est en mesure de détecter la chute de tension au niveau de la résistance (18), et de transmettre au contact de mesure (6b) en fonction de la chute de tension un signal représentatif pour l'état de fonctionnement de l'élément de chauffage (1).

14. Procédé de chauffage d'un fluide, avec lequel un élément de chauffage comportant au moins un corps de chauffage électrique est alimenté en énergie électrique et délivre son énergie thermique au fluide, **caractérisé en ce que** la fonction de l'élément de chauffage est surveillée en fonction de la chute de tension au niveau d'une résistance couplée en série avec l'au moins un corps de chauffage électrique, qui est intégrée dans l'élément de chauffage.

15. Procédé selon la revendication 14, **caractérisé en ce qu'**un signal d'alarme est délivré lorsque la chute de tension au niveau de la résistance dépasse une valeur limite prédéterminée.

16. Procédé selon la revendication 14 ou 15, **caractérisé en ce que** le signal d'alarme est délivré lorsque la chute de tension dépasse une valeur prédéterminée.
